# EUROPÄISCHE PATENTSCHRIFT

(11) **EP 0 330 956 B1**
(45) Veröffentlichungstag und Bekanntmachung des Hinweises auf die Patenterteilung: **25.08.1993**
(21) Anmeldenummer: 89102901.9
(22) Anmeldetag: 20.02.1989
(51) Int. Cl.: H02B 1/04

(54) **Befehlsgerätebefestigung**
Control gear mounting
Fixation d'appareils de commande

(30) Priorität: 03.03.1988 DE 8802896 U
(43) Veröffentlichungstag der Anmeldung: 06.09.1989
(73) Patentinhaber: SIEMENS AKTIENGESELLSCHAFT, 80333 München (DE)
(72) Erfinder: Birzer, Josef, Dipl.-Ing.(FH), D-8460 Schwandorf (DE)

(56) Entgegenhaltungen:
- BE-A- 569 595
- DE-A- 3 418 845

## Beschreibung

Die Erfindung bezieht sich auf einen Befehlsschalterantrieb mit einer Rosette, die einen eine Bohrung in einer Schalttafel durchdringen Zylinder aufweist, mit dem ein auf der einen Seite der Schalttafel aufliegender Frontring verbunden ist und der auf der anderen Seite der Schalttafel mit einem Halterungsteil verbindbar, wobei in dem Halterungsteil Spannschrauben eingedreht sind, die zum Verspannen der Rosette über zwei in angepaßte Ausnehmungen des Zylinders einbringbare Riegel mit der Schalttafel dienen.

Bei einem bekannten Befehlsschalterantrieb der obengenannten Art (DE-A-34 18 845) werden als Verriegelungsmittel zwischen Halterungsteil und Rosette auf das Gewinde der Schrauben aufgedrehte Exzenter benutzt, die bei zusammengefügtem unverspannten Befehlsschalterantrieb aus einem Schlitz in dem Halterungsteil in eine Nut in der Rosette einschraubbar sind.

Bei weiterhin bekannten Befehlsschaltern (DE-U 77 12 822) ist die Rosette mit dem Halterungsteil nach Art eines Bajonettverschlusses miteinander verbunden. Dies bedeutet, daß bei Verwendung rechteckiger Rosetten bzw. Halterungsteile ein Einbaurahmen notwendig ist, der mindestens der Diagonale dieser Teile entspricht, da zur Bajonettverbindung eine Verdrehung der beiden Teile gegeneinander notwendig ist. Es ist auch bekannt (DE-U 19 56 645), bei Verwendung einer quadratischen Rosette, auf der der Schalttafel gegenüberliegenden Seite auf den Zylinder eine Mutter aufzudrehen. Hier ist ein Spezialwerkzeug zum Anziehen der Mutter erforderlich. Durch die Erfindung soll eine Befestigungsanordnung geschaffen werden, die bei einfachem Aufbau ohne Spezialwerkzeug die Befestigung mehrerer Geräte nebeneinander im dichten Rasten ermöglicht. Dies wird auf einfache Weise dadurch erreicht, daß die Riegelverbindung zwischen Rosette und Halterungsteil aus zumindest zwei einander diagonal gegenübeliegenden, entgegen einer Federkraft rückdrängbaren, am Halterungsteil angeordneten Rastriegeln besteht, die in Ausnehmungen des Zylinders einrastbar sind. Um die Rastriegel großflächig wirken zu lassen ist es vorteilhaft, wenn die Rastriegel kreisringförmige, eine Ringnut im Zylinder angepaßte Außenkontur mit schrägen Anlaufflächen aufweisen. Die schrägen Anlaufflächen bewirken ein leichtes Aufsetzen des Halterrungsteils auf den Zylinder. Um auch für die Spannschrauben im Halterungsteil einen die Kontur des Halterungsteiles nicht vergrößernden Platz finden zu können ist es vorteilhaft, wenn das Halterungsteil quadratische Form hat und die Rastriegel in zwei diagonal gegenüberliegenden Ecken angeordnet sind. Eine einfache Halterung der Rastriegel ohne zusätzliche Teile ergibt sich, wenn das Halterungsteil quer zur Verschiebungsrichtung der Rastriegel verlaufende Einschuböffnungen für die Rastriegel aufweist und daß in der Einschuböffnung Anschlagkanten zur Bewegungsbegrenzung der Rastriegel sowie Abstützungsflächen für die Rastriegelfedern angeformt sind. Um gegebenenfalls die Verbindung zwischen Halterungsteil und Rosette aufheben zu können ist es vorteilhaft, wenn an den Rastriegeln Rückholzapfen angeformt sind, die von der der Rosette abgelegenen Seite des Halterungsteils zugänglich sind. Um ein falsches Aufsetzen des Halterungsteils auf den Zylinder zu vermeiden ist es vorteilhaft, wenn am Zylinder und Halterungsteil Codiermittel vorgesehen sind.

Anhand der Zeichnung werden Ausführungsbeispiele gemäß der Erfindung beschrieben.

Es zeigen:
- FIG 1: Rosette und Halterungsteil im eingebauten Zustand in Seitenansicht, zum Teil im Schnitt,
- FIG 2: eine Draufsicht auf das Halterungsteil im Bereich des Rastriegels, geschnitten,
- FIG 3: eine Seitenansicht auf die Rosette,
- FIG 4: eine Querschnitt gemäß der Linie IV-IV nach FIG 3

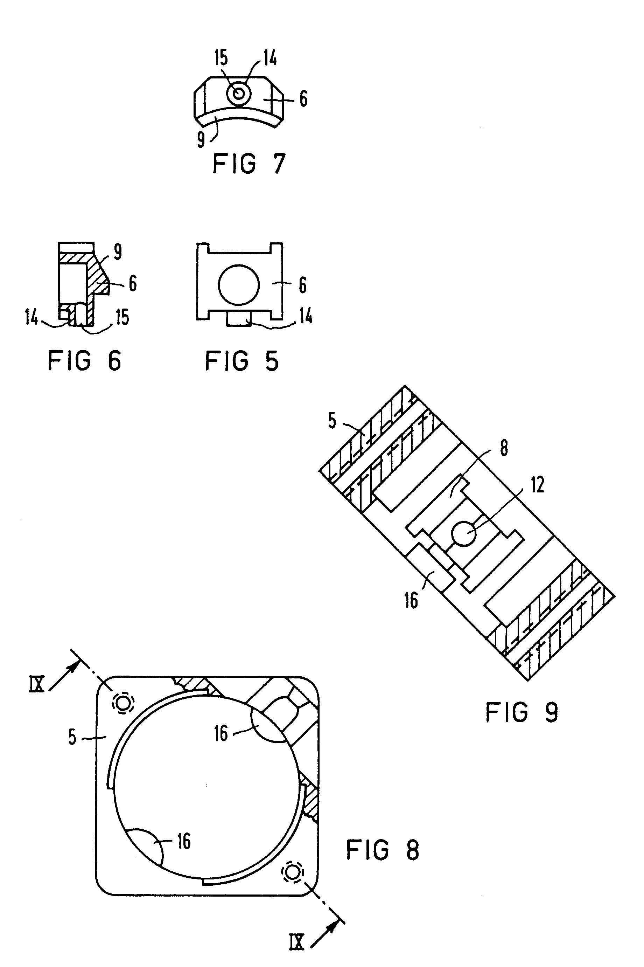

- FIG 5, 6 und 7: Vorder-, Seitenansicht und Draufsicht auf den Rastriegel und
- FIG 8 und 9: Draufsicht und Seitenschnitt des Halterungsteiles.

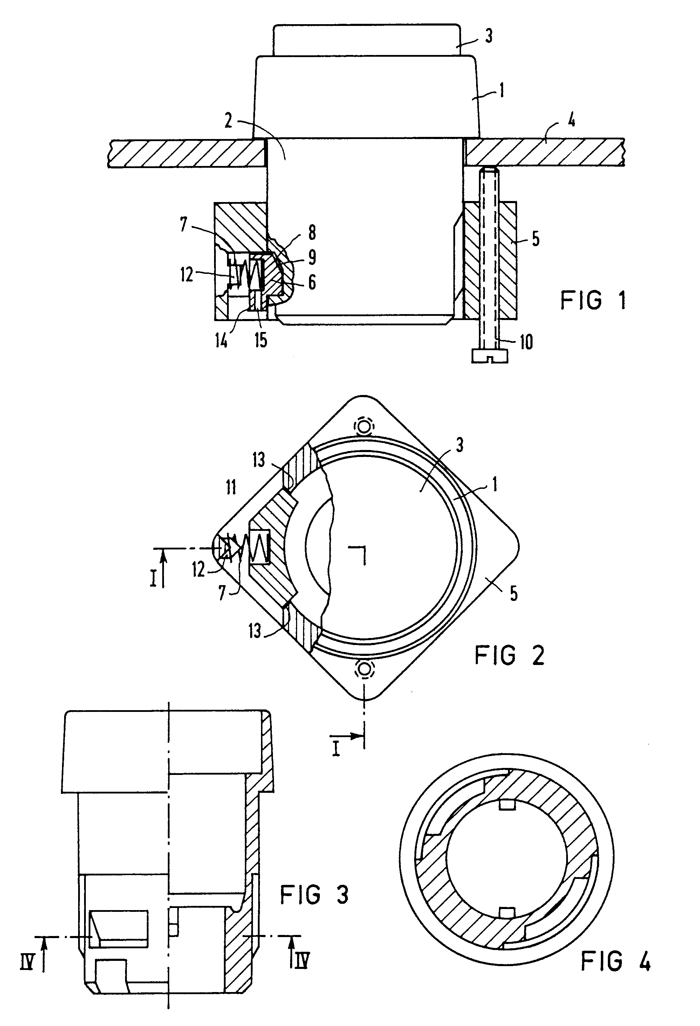

Der in FIG 1 dargestellte Befehlsgeräteantrieb besteht aus der Rosette 1 mit dem daran angeformten Zylinder 2, in dem das Betätigungsteil 3 für den Befehlsschalter verschiebbar geführt ist. Der Zylinder 2 durchdringt eine Schalttafel 4, liegt mit einem Frontring auf dieser auf und ist mit einem Halterungsteil 5 über Schnappverbindung verbunden. Hierzu dienen im Halterungsteil verschiebbar geführte Rastriegel 6, die über eine Feder 7 in Richtung auf den Zylinder 2 federbelastet sind und Ausnehmungen 8 im Zylinder 2, die der Rastriegelform angepaßt sind, im vorliegenden Fall als Teile einer Ringnut ausgebildet. Die Rastriegel 6 besitzen schräge Anlaufflächen 9, so daß sie beim Eindrücken des Zylinders selbsttätig zurückgedrängt werden und in der richtigen Stellung in die Ausnehmung 8 einschnappen können. Zum Verspannen der Rosette mit der Schalttafel 4 dienen in das Halterungsteil 5 eingedrehte Spannschrauben 10, die in zwei diagonal gegenüberliegenden Ecken des quadratisch ausgeführten Halterungsteiles 5 - wie die FIG 2 zeigt - eingedreht sind. Die Rastriegel sind an den diesen beiden Schrauben benachbarten, ebenfalls diagonal gegenüberliegenden Ecken des Halterungsteiles angebracht. Zum Einführen der Rastriegel 6 in das Halterungsteil 5 dienen quer zur Verschiebungsrichtung der Rastriegel verlaufende Einschuböffnungen 11. Beim Einschieben wird die Feder 7 auf Blockmaß zusammengedrückt. Sie stützt sich hernach auf einem Abstützungszapfen 12 ab. Zur Bewegungsbegrenzung der Rastriegel in Richtung auf die Einschuböffnung im Halterungsteil 5 für den Zylinder 2 dienen Anschlagkanten 13 der Öffnung 11. Rückholzapfen 14 können an den Rastriegeln angebracht oder angeformt werden. Im letzteren Fall ist die Einschuböffnung mit einer entsprechenden Nut zu versehen. Die Rückholzapfen haben Öffnungen 15 zum Einsetzen eines Schraubendrehers oder einer Zange, die gleichzeitig beide Rastriegel zurückführen kann. Um eine genaue Zuordnung der Rosette zum Halterungsteil beim Einführen zu erreichen, dienen Führungsvorsprünge 16 im Halterungsteil 5, die in entsprechende Nuten des Zylinders einführbar sind. Durch die Erfindung ist somit eine Ausführung geschaffen, bei der der Halter ohne Werkzeug gerade aufgeschnappt werden kann, d.h. es ist kein Werkzeug notwendig, wie bei der Ringmutterbefestigung oder eine Drehbewegung, wie bei der oben dargestellten Bajonettverbindung.

## Patentansprüche

1. Befehlsschalterantrieb mit einer Rosette (1), die einen eine Bohrung in einer Schalttafel (4) durchdringenden Zylinder (2) aufweist, mit dem ein auf der einen Seite der Schalttafel (4) aufliegender Frontring verbunden ist und der auf der anderen Seite der Schalttafel (4) mit einem Halterungsteil (5) verbindbar, wobei in dem Halterungsteil (5) Spannschrauben (10) eingedreht sind, die zum Verspannen der Rosette (1) über zwei in angepaßte Ausnehmungen (8) des Zylinders (2) einbringbare Riegel (6) mit der Schalttafel (4) dienen, **dadurch gekennzeichnet,** daß die Riegelverbindung zwischen Rosette (1) und Halterungsteil (5) aus zumindest zwei einander diagonal gegenüberliegenden, entgegen einer Federkraft (7) rückdrängbaren, am Halterungsteil (5) angeordneten Rastriegeln (6) besteht, die in die Ausnehmungen (8) des Zylinders (2) einrastbar sind.

2. Befehlsschalterantrieb nach Anspruch 1, **dadurch gekennzeichnet,** daß die Rastriegel (6) kreisringförmige, einer Ringnut (8) im Zylinder angepaßte Außenkontur mit schrägen Anlaufflächen (9) aufweisen.

3. Befehlsschalterantrieb nach Anspruch 1 oder 2, **dadurch gekennzeichnet,** daß das Halterungsteil (5) quadratische Form hat und die Rastriegel (6) in zwei diagonal gegenüberliegenden Ecken angeordnet sind.

4. Befehlsschalterantrieb nach Anspruch 3, **dadurch gekennzeichnet,** daß das Halterungsteil (5) quer zur Verschiebungsrichtung der Rastriegel (6) verlaufende Einschuböffnungen (11) für die Rastriegel (6) aufweist und daß in der Einschuböffnung (11) Anschlagkanten (13) zur Bewegungsbegrenzung der Rastriegel (6) sowie Abstützungsflächen (12) für die Rastriegelfedern (7) angeformt sind.

5. Befehlsschalterantrieb nach einem der vorhergehenden Ansprüche, **dadurch gekennzeichnet,** daß an den Rastriegeln (6) Rückholzapfen (14) angeformt sind, die von der der Rosette (1) abgelegenen Seite des Halterungsteils (5) zugänglich sind.

6. Befehlsschalterantrieb nach einem der vorhergehenden Ansprüche, **dadurch gekennzeichnet,** daß am Zylinder (2) und Halterungsteil (5) Codiermittel vorgesehen sind.

## Claims

1. Control switch mechanism having a rosette (1) which has a cylinder (2) entering a hole in a control panel (4), a mounting ring located on one side of the control panel (4) being connected to the cylinder (2) and the cylinder (2) being capable of connection on the other side of the control panel (4) to a holding element (5), whereby tightening bolts (10) are screwed into the holding element (5), which tightening bolts serve to brace the rosette (1) with the control panel (4) by way of two locking bars (6) which can be inserted in matched recesses (8) in the cylinder (2), characterised in that the locking bar connection between the rosette (1) and the holding element (5) consists of at least two locking bars (6) which are arranged on the holding element (5) diagonally opposite each other and which can be pushed back against a spring force (7) and can lock home in the recesses (8) in the cylinder (2).

2. Control switch mechanism according to claim 1, characterised in that the locking bars (6) have an annular-shaped outer contour which is matched to an annular slot (8) in the cylinder and has sloping abutment surfaces (9).

3. Control switch mechanism according to claim 1 or 2, characterised in that the holding element (5) has a square shape and the locking bars (6) are arranged in two diagonally opposite corners.

4. Control switch mechanism according to claim 3, characterised in that the holding element (5) has insertion openings (11) for the locking bars (6), which insertion openings extend transversely to the direction of displacement of the locking bars (6), and in that, in the insertion opening (11), there are pre-formed stopping edges (13) for limiting the movement of the locking bars (6), as well as supporting surfaces (12) for the locking bar springs (7).

5. Control switch mechanism according to one of the preceding claims, characterised in that return pins (14) are pre-formed on the locking bars (6), which return pins are accessible from the side of the holding element (5) remote from the rosette (1).

6. Control switch mechanism according to one of the preceding claims, characterised in that alignment means are provided on the cylinder (2) and the holding element (5).

## Revendications

1. Dispositif d'entraînement d'un commutateur de commande comportant une rosette (1), qui possède un perçage dans un cylindre (2) qui traverse un panneau de commande (4) et auquel est raccordée une bague frontale appliquée sur une face du panneau de commande (4) et qui peut être raccordée, de l'autre côté du panneau de commande (4), à une partie de retenue (5), dans laquelle sont vissées des vis de serrage (10) qui servent à serrer la rosette (1) contre le panneau de commande (4), par l'intermédiaire de deux verrous (6) pouvant être insérés dans des évidements adaptés (8) du cylindre (2), caractérisé par le fait que la liaison par verrous entre la rosette (1) et la partie de retenue (5) est constituée par au moins deux verrous encliquetables (6), qui sont opposés en diagonale, qui peuvent être rétractés à l'encontre de la force d'un ressort (7), qui sont montés sur la partie de retenue (5) et qui peuvent être encliquetés dans les évidements (8) du cylindre (2).

2. Dispositif d'entraînement d'un commutateur de commande suivant la revendication 1, caractérisé par le fait que les verrous d'encliquetage (6) possèdent un compteur extérieur en forme d'anneau circulaire, qui est adapté à une rainure annulaire (8) ménagée dans le cylindre et comporte des surfaces obliques montantes (9).

3. Dispositif d'entraînement d'un commutateur de commande suivant la revendication 1 ou 2, caractérisé par le fait que la partie de retenue (5) possède une forme carrée et que les verrous d'encliquetage (6) sont disposés dans deux angles opposés en diagonale.

4. Dispositif d'entraînement d'un commutateur de commande suivant la revendication 3, caractérisé par le fait que la partie de retenue (5) possède, pour les verrous d'encliquetage (6), des ouvertures d'insertion (11) qui s'étendent transversalement par rapport à la direction de déplacement des verrous d'encliquetage (6), et que des arêtes de butée (13) servant à limiter le déplacement des verrous d'encliquetage (6) ainsi que des surfaces d'appui (12) pour les ressorts (7) des verrous d'encliquetage sont conformées dans l'ouverture d'insertion (11).

5. Dispositif d'entraînement d'un commutateur de commande suivant l'une des revendications précédentes, caractérisé par le fait que sur les verrous d'encliquetage (6) sont conformés des tétons de rappel (14), qui sont accessibles à partir de la face de la partie de retenue (5), qui est tournée à l'opposé de la rosette (1).

6. Dispositif d'entraînement d'un commutateur de commande suivant l'une des revendications précédentes, caractérisé par le fait que des moyens de codage sont prévus sur le cylindre (2) et sur la partie de retenue (5).
